# EUROPÄISCHE PATENTSCHRIFT

(11) **EP 2 461 074 B1**
(45) Veröffentlichungstag und Bekanntmachung des Hinweises auf die Patenterteilung: **13.11.2013**
(21) Anmeldenummer: 11007793.0
(22) Anmeldetag: 24.09.2011
(51) Int. Cl.: F16H 55/17, F16H 55/12, B02C 17/24

(54) **Antriebszahnkranz für Maschinen**
Drive sprocket for machines
Couronne dentée d'entraînement pour machines

(30) Priorität: 01.12.2010 DE 202010016106 U
(43) Veröffentlichungstag der Anmeldung: 06.06.2012
(73) Patentinhaber: Putsch GmbH & Co. KG, 58095 Hagen (DE)
(72) Erfinder: Lücke, Fred, 27404 Seedorf (DE)
(74) Vertreter: Köchling, Conrad-Joachim

(56) Entgegenhaltungen:
- DE-A1- 1 803 772
- DE-A1- 4 315 355
- DE-A1-102004 027 127
- DE-A1-102005 020 851
- DE-U- 7 017 661

## Beschreibung

Die Erfindung betrifft einen Antriebszahnkranz für Maschinen, insbesondere Trommelsteinabscheider und Trommelkiesabscheider, wobei der Antriebszahnkranz aus einem formstabilen Ring und an diesem lösbar befestigten Zahnsegmenten aus Kunststoff besteht.

Derartige Antriebszahnkränze, die auch als Triebstöcke bezeichnet werden, werden als Antriebselement im Maschinenbau verwendet. Zum Zwecke des Antriebes ist der Antriebszahnkranz mit einem Antriebsritzel in Eingriff, welches von einem Motor angetrieben wird. Die übliche Ausführung der Laufpaarung ist Stahl auf Stahl, so dass also Antriebsritzel aus Stahl mit Antriebszahnkränzen aus Stahl zusammenwirken. In Abhängigkeit von der Maschinengröße führt die Fertigung des Antriebzahnkranzes zu erheblichen Kosten, wobei teilweise mit Halb- oder Viertelsegmenten gearbeitet wird. Unabhängig davon muss aber jeder Antriebszahnkranz auf den entsprechenden Maschinendurchmesser angepasst gefertigt werden.

Beispielsweise sind Antriebszahnkränze mit einem Durchmesser von 2500 bis 4000 mm üblich. Ein besonderes Problem besteht auch darin, dass dann, wenn durch Verschleiß einige Zähne des Antriebszahnkranzes stärker abgenutzt sind, der gesamte Zahnkranz ausgetauscht werden muss.

Aus der DE 10 2005 020 851 Al ist ein Antriebszahnkranz für Maschinen, insbesondere Mischtrommelantriebe, wobei der Antriebszahnkranz aus einem formstabilen Ring und an diesem lösbar befestigten Zahnsegmenten aus Kunststoff besteht, bekannt.

Ausgehend von diesem Stand der Technik liegt der Erfindung die Aufgabe zugrunde, einen Antriebzahnkranz zu schaffen, der kostengünstig zu fertigen ist und dessen technische Gebrauchseigenschaften verbessert sind. Zudem soll es möglich sein, den Antriebszahnkranz sowohl bei neuen Maschinen als auch als Ersatzteil bei gebrauchten Maschinen einzusetzen.

Zur Lösung dieser Aufgabe schlägt die Erfindung vor, dass die Zahnsegmente eine eingebettete Fußplatte aus Metall aufweisen, wobei die Zähne der Zahnsegmente ein eingebettetes Metallkorsett aufweisen, wobei das Metallkorsett durch einen zweischenkligen Reiter aus Bandmaterial gebildet ist, dessen Schenkelenden an die Fußplatte anschließen und dessen Schenkel der Zahnform folgend bis zur Zahnspitze verlaufen und dort in eine gerundete Spitze übergehen.

Die erfindungsgemäße Werkstoffpaarung mit herkömmlichem Antriebsritzel aus Stahl und Antriebskranzverzahnung aus Kunststoff führt dazu, das die Kosten minimiert und die technischen Gebrauchseigenschaften verbessert werden können. Auch ist ein derartiger Antriebszahnkranz als Ersatz bei gebrauchten Maschinen einsetzbar.

Vorzugsweise ist vorgesehen, dass der Ring aus Stahl besteht.

Vorzugsweise ist vorgesehen, dass die Zahnsegmente aus Elastomer bestehen. Dabei kann bevorzugt vorgesehen sein, dass die Zahnsegmente aus Polyurethan bestehen.

Die erfindungsgemäße Ausgestaltung hat den besonderen Vorteil, dass lediglich der Ring, der aus Metall, insbesondere Stahl besteht, für die unterschiedlichen Durchmesser der Antriebe angepasst gefertigt werden muss, wobei der Ring vorzugsweise aus einem Flachmaterial gebogen und mit den Enden verschweißt wird. Die Zahnsegmente aus Kunststoff können in entsprechender Länge gefertigt werden und auf den Ring aufgebracht und an diesem befestigt werden. Hierdurch sind die Produktionskosten deutlich minimiert.

Die mit erfindungsgemäßen Antriebszahnkränzen ausgerüsteten Antriebe unterliegen teils hohen Stoßbelastungen, was bisher mit hohen Sicherheitsfaktoren abgefangen werden muss, woraus im Stand der Technik der Nachteil resultiert, dass der Antrieb schwer und teuer wird.

Durch den Einsatz von Kunststoff, insbesondere Elastomeren, vorzugsweise Polyurethan zur Herstellung der Zahnsegmente wird erreicht, dass diese beim Betrieb dämpfend wirken, so dass die Getriebe entlastet sind, was sich in längeren Stand- und Laufzeiten bemerkbar macht.

Die Verzahnung, die üblicherweise als Evolventenverzahnung ausgebildet ist, ist bei den herkömmlichen Antriebszahnkränzen aus Metall schwierig herzustellen.

Durch die Herstellung der Segmente aus Kunststoff wird hier eine erhebliche Fertigungsvereinfachung erreicht, so dass mit hoher Präzision entsprechende Segmente hergestellt und zur Verfügung gestellt werden können, woraus eine hohe Laufruhe resultiert und mögliche Differenzen in den Achsabständen kompensiert werden.

Im Vergleich zu Stahl haben Kunststoffe einen geringeren Verschleiß. Dieser Vorteil wird betriebsbedingt durch den Schmierstoff Wasser noch verbessert, wenn nämlich solche Antriebszahnkränze bei Trommelsteinabscheidern oder Trommelkiesabscheidern eingesetzt werden, wie dies beabsichtigt ist.

Bevorzugt ist ferner vorgesehen, dass die Zahnsegmente eine eingebettete Fußplatte aus Stahl aufweisen.

Auch ist bevorzugt vorgesehen, dass das Metallkorsett durch ein Stahlkorsett gebildet ist.

Des Weiteren ist besonders bevorzugt vorgesehen, dass die Fußplatte im Bereich des Zahngrundes zwischen benachbarten Zähnen eine Sollbiegestelle aufweist.

Hierbei kann vorgesehen sein, dass die Sollbiegestelle durch ein Langloch in der Fußplatte gebildet ist, das sich quer zum Ring erstreckt.

Für die Übertragung der auftretenden Schubkräfte beim Betrieb der entsprechenden Antriebszahnkränze und zur Stabilisierung der Zahnfußtragfähigkeit ist ein entsprechend ausgebildetes Stahlkorsett bevorzugt, welches von dem Kunststoff umhüllt wird. Insbesondere durch die Ausbiegung der Sollbiegestelle wird die Flexibilität der Zahnsegmente verbessert, so dass unterschiedliche Antriebszahnkranzdurchmesser mit den gleichen Zahnsegmenten zu realisieren sind.

Bevorzugt ist ferner vorgesehen, dass die Fußplatte, vorzugsweise im Bereich eines jeden Zahnes des Zahnsegmentes, und das die Fußplatte zum Ring hin abdeckende Material eine Lochung aufweist, wobei die Lochung der Fußplatte als Gewindelochung ausgebildet ist, der Ring an entsprechenden Stellen ebenfalls Lochungen aufweist, und in die Lochungen Schrauben eingesetzt sind, mittels derer das Zahnsegment am Ring lösbar befestigt ist.

Die Befestigung der Zahnsegmente an dem Ring erfolgt mittels Schrauben, die durch entsprechende Lochungen des Ringes des Kunststoffes geführt und in die Gewindelochungen der Fußplatten eingeschraubt werden.

Besonders bevorzugt ist vorgesehen, dass eine Vielzahl von Zahnsegmenten vorgesehen sind, die jeweils zwei Zähne aufweisen.

Durch eine solche Ausgestaltung, bei der jedes Zahnsegment nur zwei Zähne aufweist, einschließlich der entsprechenden Versteifungs- und Befestigungselemente, ist es möglich, unterschiedlichste Durchmesser mit den gleichen Zahnsegmenten zu realisieren.

Darüber hinaus ist es im Verschleißfall möglich, einzelne Zahnsegmente mit jeweils zwei Zähnen auszuwechseln, so dass ein kostengünstiger Ersatz bei Verschleiß von einzelnen Zahnsegmenten ermöglicht ist.

Ein Ausführungsbeispiel der Erfindung ist in der Zeichnung dargestellt und im Folgenden näher beschrieben.

Es zeigt:

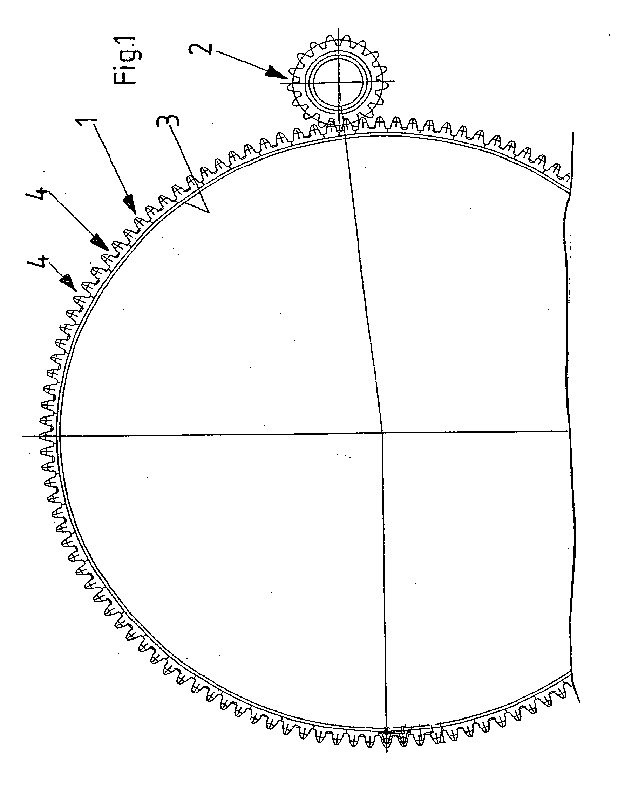

- Figur 1: einen Antriebszahnkranz (teilweise) in Ansicht mit Antriebsritzel;

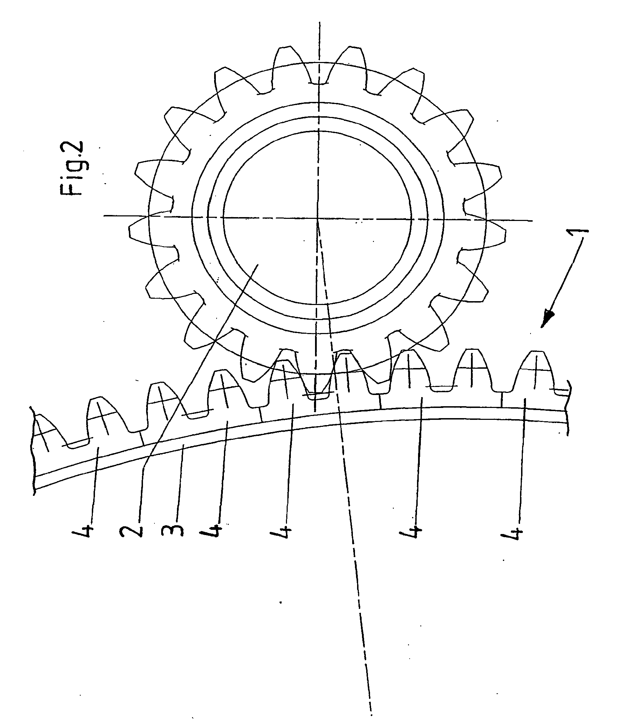

- Figur 2: eine Ausschnittsvergrößerung der Figur 1;
- Figur 3: eine Einzelheit in vergrößerter Ansicht;
- Figur 4: ein einzelnes Segment in Ansicht;
- Figur 5: das Segment von unten gesehen.

In der Zeichnung ist ein Antriebszahnkranz 1 für Maschinen gezeigt. Vorzugsweise handelt es sich dabei um Trommelsteinabscheider oder Trommelkiesabscheider. Ein solcher Antriebszahnkranz 1 wird als Antriebselement verwendet, wobei der Antrieb mittels eines Ritzels 2 erfolgt, welches elektromotorisch angetrieben ist und dessen Zähne mit den Zähnen des Antriebszahnkranzes 1 in Eingriff sind.

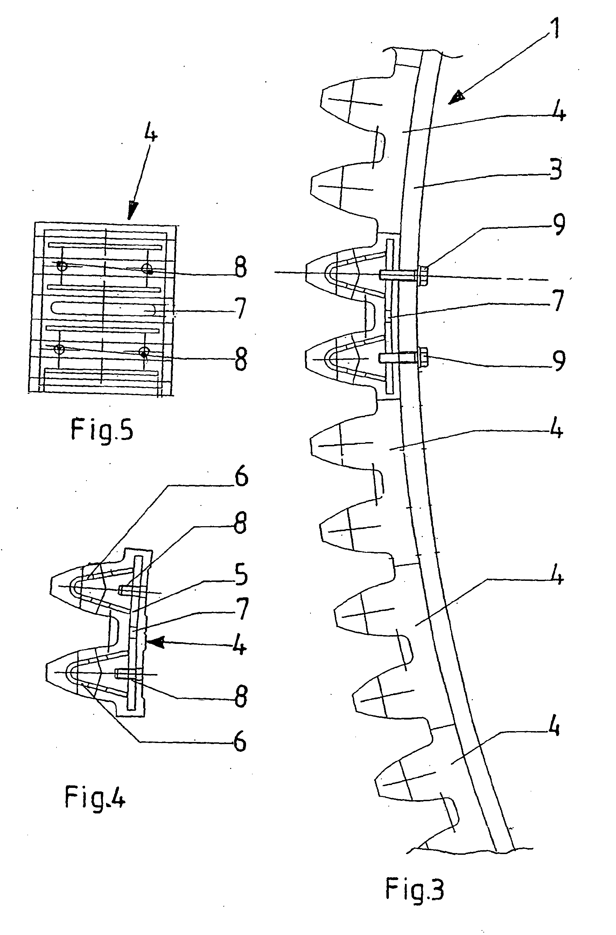

Wie insbesondere aus Figur 3 und 4 ersichtlich, ist die Verzahnung des Antriebszahnkranzes 1 als Evolventenverzahnung ausgebildet.

Erfindungsgemäß besteht der Antriebszahnkranz 1 aus einem radial innenliegenden formstabilen Ring 3 und einer Vielzahl an diesen lösbar befestigten Zahnsegmenten 4. Der Ring 3 besteht vorzugsweise aus Flachmaterial aus Stahl. Die Zahnsegmente 4 bestehen aus Elastomerwerkstoff, vorzugsweise Polyurethan. Jedes Zahnsegment 4 weist eine eingebettete Fußplatte 5 aus Stahl auf. Zusätzlich sind die Zähne der Zahnsegmente 4 durch ein eingebettetes Metallkorsett, vorzugsweise Stahlkorsett 6 verstärkt. Jedes Metallkorsett ist durch einen zweischenkligen Reiter aus Bandmaterial gebildet, dessen Schenkelenden an die Fußplatte 5 anschließen und dessen Schenkel der Zahnform folgend bis zur Zahnspitze verlaufen und dort in eine gerundete Spitze übergehen. Besonders gut ist dies in Figur 3 und Figur 4 ersichtlich.

Die Fußplatte 5 ist im Bereich des Zahngrundes zwischen zwei benachbarten Zähnen mit einer Sollbiegestelle 7 ausgebildet, die im Ausführungsbeispiel durch ein Langloch in der Fußplatte 5 gebildet ist, welches sich quer zum Ring 3 erstreckt. Dies ist insbesondere in Figur 5 gut ersichtlich.

Die Fußplatte 5 weist im Bereich eines jeden Zahnes des Zahnsegmentes 4 eine Gewindelochung 8 auf. Auch das die Fußplatte abdeckende Kunststoffmaterial ist gelocht, wobei die Gewindelochung 8 sich auch bis in den Zahnkörper aus Kunststoff fortsetzen kann. Zur Befestigung am Ring 3 sind entsprechende Schrauben 9 im Ausführungsbeispiel, Kopfschrauben, vorgesehen.

Der Antriebszahnkranz weist eine Vielzahl von Zahnsegmenten 4 auf, die jeweils nur zwei Zähne haben. Durch die entsprechende Ausgestaltung ist es möglich, den Durchmesser des Antriebszahnkranzes in einfacher Weise anzupassen, indem auf einen passenden Ring 3 eine entsprechende Vielzahl von Zahnsegmenten 4 aufgebracht werden, die aufgrund der Materialelastizität und insbesondere aufgrund der Sollbiegestelle 7 ausreichend biegbar sind, so dass unterschiedliche Durchmesser von Antriebszahnkränzen hergestellt werden können. Bei einem Verschleiß können jeweils einzelne Zahnsegmente 4 ausgewechselt werden. Die Werkstoffpaarung, wonach das Antriebsritzel 2 aus Stahl besteht, während die Zahnsegmente aus Kunststoff bestehen, minimieren nicht nur die Kosten, sondern die Gebrauchseigenschaften werden dadurch verbessert.

Die Erfindung ist nicht auf das Ausführungsbeispiel beschränkt, sondern im Rahmen der Offenbarung vielfach variabel.

## Patentansprüche

1. Antriebszahnkranz (1) für Maschinen, insbesondere Trommelsteinabscheider und Trommelkiesabscheider,wobei der Antriebszahnkranz (1) aus einem formstabilen Ring (3) und an diesem lösbar befestigten Zahnsegmenten (4) aus Kunststoff besteht, •**dadurch gekennzeichnet, dass** die Zahnsegmente (4) eine eingebettete Fußplatte (5) aus Metall aufweisen, wobei die Zähne der Zahnsegmente (4) ein eingebettetes Metallkorsett (6) aufweisen, wobei das Metallkorsett (6) durch einen zweischenkligen Reiter aus Bandmaterial gebildet ist, dessen Schenkelenden an die Fußplatte (5) anschließen und dessen Schenkel der Zahnform folgend bis zur Zahnspitze verlaufen und dort in eine gerundete Spitze übergehen.

2. Antriebszahnkranz nach Anspruch 1, **dadurch gekennzeichnet, dass** die eingebettete Fußplatte (5) aus Stahl besteht.

3. Antriebszahnkranz nach Anspruch 1 oder 2, **dadurch gekennzeichnet, dass** das Metallkorsett (6) durch ein Stahlkorsett gebildet ist.

4. Antriebszahnkranz nach einem der Anspruch 1 bis 3, **dadurch gekennzeichnet, dass** der Ring (3) aus Stahl besteht.

5. Antriebszahnkranz nach einem der Anspruch 1 bis 4, **dadurch gekennzeichnet, dass** die Zahnsegmente (4) aus Elastomer bestehen.

6. Antriebszahnkranz nach Anspruch 5, **dadurch gekennzeichnet, dass** die Zahnsegmente (4) aus Polyurethan bestehen.

7. Antriebszahnkranz nach einem der Anspruch 1 bis 6, **dadurch gekennzeichnet, dass** die Fußplatte (5) im Bereich des Zahngrundes zwischen benachbarten Zähnen eine Sollbiegestelle (7) aufweist.

8. Antriebszahnkranz nach Anspruch 7, **dadurch gekennzeichnet, dass** die Sollbiegestelle (7) durch ein Langloch in der Fußplatte (5) gebildet ist, das sich quer zum Ring (3) erstreckt.

9. Antriebszahnkranz nach einem der Ansprüche 1 bis 8, **dadurch gekennzeichnet, dass** die Fußplatte (5), im Bereich eines jeden Zahnes des Zahnsegmentes (4), und das die Fußplatte (5) zum Ring (3) hin abdeckende Material eine Lochung aufweist, wobei die Lochung der Fußplatte (5) als Gewindelochung (8) ausgebildet ist, der Ring (3) an entsprechenden Stellen ebenfalls Lochungen aufweist, und in die Lochungen Schrauben (9) eingesetzt sind, mittels derer das Zahnsegment (4) am Ring (3) lösbar befestigt ist.

10. Antriebszahnkranz nach einem der Ansprüche 1 bis 9, **dadurch gekennzeichnet, dass** eine Vielzahl von Zahnsegmenten (4) vorgesehen sind, die jeweils zwei Zähne aufweisen.

## Claims

1. A drive sprocket (1) for machines, in particular drum-type rock and gravel catchers, wherein the drive sprocket (1) comprises a dimensionally stable ring (3) and toothed segments (4) made of plastic and releasably attached thereto, **characterized in that** the toothed segments (4) comprise an embedded base plate (5) made of metal, wherein the teeth of the toothed segments (4) comprise an embedded metal brace (6), wherein the metal brace (6) is formed by a two-legged slider made of strip material, the leg ends thereof adjoining the base plate (5) and the legs thereof follow the toothed shape to the tooth tip and merge there into a radiused tip.

2. The drive sprocket according to claim 1, **characterized in that** the embedded base plate (5) is made of steel.

3. The drive sprocket according to claim 1 or 2, **characterized in that** the metal brace (6) is formed by a steel brace.

4. The drive sprocket according to one of claims 1 to 3, **characterized in that** the ring (3) is made of steel.

5. The drive sprocket according to one of claims 1 to 4, **characterized in that** the toothed segments (4) are made of an elastomer.

6. The drive sprocket according to claim 5, **characterized in that** the toothed segments (4) are made of polyurethane.

7. The drive sprocket according to one of claims 1 to 6, **characterized in that** the base plate (5) has a predetermined bending point (7) in the area of the tooth root between adjacent teeth.

8. The drive sprocket according to claim 7, **characterized in that** the predetermined bending point (7) is formed by an oblong hole in the base plate (5) extending transversely to the ring (3).

9. The drive sprocket according to one of claims 1 to 8, **characterized in that** the base plate (5), in the area of each tooth of the toothed segment (4), and the material covering the base plate (5) toward the ring (3) comprises a hole, the hole of the base plate (5) being formed as a threaded hole (8), and the ring (3) equally comprising holes at appropriate places, and screws (9) being fitted in said holes, by means of said screws the toothed segment (4) being releasably attached at the ring (3) .

10. The drive sprocket according to one of claims 1 to 9, **characterized in that** a plurality of toothed segments (4) are provided, each comprising two teeth.

## Revendications

1. Couronne dentée d'entraînement (1) pour machines, en particulier épierreurs à tambour et capteurs de gravier à tambour, dans laquelle la couronne dentée (1) comprend un anneau (3) de forme stable et des secteurs dentés (4) réalisés en matière plastique et fixés à celui-ci de manière amovible, **caractérisée en ce que** les secteurs dentés (4) comprennent une base (5) intégrée et réalisée en métal, les dents des secteurs dentés (4) comprenant un élément de renfort métallique (6) intégré, l'élément de renfort métallique (6) étant réalisé par une glissière à deux branches réalisée en un matériau en bande, les extrémités des branches de celle-ci étant voisines de la base (5) et les branches de celle-ci suivant la forme dentée jusqu'au sommet de dent et fusionnant là-haut avec un embout arrondi.

2. Couronne dentée d'entraînement selon la revendication 1, **caractérisée en ce que** la base (5) intégrée est réalisée en acier.

3. Couronne dentée d'entraînement selon la revendication 1 ou 2, **caractérisée en ce que** l'élément de renfort métallique (6) est formé par un élément de renfort en acier.

4. Couronne dentée d'entraînement selon une des revendications 1 à 3, **caractérisée en ce que** l'anneau (3) est réalisé en acier.

5. Couronne dentée d'entraînement selon une des revendications 1 à 4, **caractérisée en ce que** les secteurs dentés (4) sont réalisés en un élastomère.

6. Couronne dentée d'entraînement selon la revendication 5, **caractérisée en ce que** les secteurs dentés (4) sont réalisés en polyuréthane.

7. Couronne dentée d'entraînement selon une des revendications 1 à 6, **caractérisée en ce que** la base (5) a un emplacement de flexion de consigne (7) dans le domaine du pied de dent entre des dents voisins.

8. Couronne dentée d'entraînement selon la revendication 7, **caractérisée en ce que** l'emplacement de flexion de consigne (7) est réalisé par un trou allongé dans la base (5) s'étendant transversalement à l'anneau (3).

9. Couronne dentée d'entraînement selon une des revendications 1 à 8, **caractérisée en ce que** la base (5), dans le domaine de chaque dent du secteur denté (4), et le matériau recouvrant la base (5) vers l'anneau (3) comprend un trou, le trou de la base (5) étant réalisé comme trou fileté (8), et l'anneau (3) aussi comprenant des trous à des positions appropriées, et des vis (9) étant prévues dans ces trous, aux moyen desquelles le secteur denté (4) est fixé de manière amovible à l'anneau (3).

10. Couronne dentée d'entraînement selon une des revendications 1 à 9, **caractérisée en ce que** une pluralité de secteurs dentés (4) sont prévus, chacun comprenant deux dents.
